# EUROPÄISCHE PATENTANMELDUNG

(11) **EP 0 831 137 A2**
(43) Veröffentlichungstag der Anmeldung: **25.03.1998**
(21) Anmeldenummer: 97116324.1
(22) Anmeldetag: 19.09.1997
(51) Int. Cl.: C09J 7/02

(54) **Folienband**

(30) Priorität: 23.09.1996 DE 19638914; 26.11.1996 EP 96118904
(71) Anmelder: BESMA BESCHICHTUNGSMASSEN GmbH, D-69115 Heidelberg (DE)
(72) Erfinder: Klösel, Egon, 69190 Walldorf (DE)
(74) Vertreter: Sartorius, Peter, Dipl.-Ing.

(57) **Zusammenfassung**

**Die Erfindung bezieht sich auf** folgende Merkmale:
1) zumindest auf der ersten Seite bzw. Unterseite 21 der Trägerfolie 13 ist ein Kleber 15 zum Befestigen auf einer Unterlage bzw. Abdeckfolie 22 vorgesehen,
2) der Kleber 15 zum Befestigen auf einer Unterlage bzw. zum Befestigen einer Abdeckfolie 22 erstreckt sich über zumindest mehr als ein Drittel der Gesamtbreite b₁ der Trägerfolie 13 und maximal über die Gesamtbreite b₁ der Trägerfolie 13,
3) auf der zweiten bzw. anderen Seite bzw. auf der Oberseite 23 der Trägerfolie 13 ist ein Kleber 11 vorgesehen,
4) der Kleber 11 zum Befestigen erstreckt sich zumindest über ein Drittel der Gesamtbreite b₁ der Trägerfolie 13 und maximal über zwei Drittel der Gesamtbreite b₁ der Trägerfolie 13,
5) der obere Kleber 11 beginnt mit seiner Klebefläche jeweils an der außenliegenden Stirnkante 17 der Trägerfolie 13 und der untere Kleber 15 beginnt mit seiner Klebefläche jeweils an der der oberen Stirnkante 17 gegenüberliegenden Stirnkante 14 der Trägerfolie 13.

## Beschreibung

**Die Erfindung bezieht sich auf** ein formbares Folienband zum Abschirmen, Isolieren, Abdecken oder Dichten und/oder zum Befestigen von Teilen mit einer Trägerfolie.

**Es ist bereits ein** selbstklebendes Band bekannt (DE 41 15 839 C1), das mit einem bandförmigen, zwei parallele Ränder aufweisenden Träger versehen ist, der aus einem geschlossenzelligen Schaumstoffmaterial besteht und auf einer Außenseite Klebstoff trägt, der auf einen sich längs eines der Ränder erstreckenden und an diesen angrenzenden Streifen beschränkt ist, wobei zusätzlich auf der anderen Außenseite des Trägers in einem weiteren Streifen Klebstoff vorhanden ist, und daß der weitere Streifen an den anderen Rand angrenzt. Dabei ist jeder Streifen weniger als halb so breit wie der Träger. Da der bandförmige Träger eine zellenförmige Struktur aufweist, können die beiden streifenförmigen Kleber jedoch nicht direkt auf den Träger aufgebracht werden, da diese sonst nicht haften bzw. in der zellenförmigen Struktur verlaufen würden, so daß übermäßig viel Kleber notwendig wäre. Dadurch würde sich der Träger mit Klebstoff vollsaugen, so daß die Elastizität des Trägers verringert wird. Aus diesem Grund sind die Träger zwischen zwei Folien untergebracht, d. h. es ist ein doppelseitiges Klebeband mit einer PVC-Folie aufgebracht. Dadurch erhält man insgesamt 7 verschiedene Schichten. Hierdurch wird das Herstellungsverfahren für ein derartiges Klebeband aufwendig und teuer. Ferner müssen die Schutzfolien, die für beide Kleber unbedingt notwendig sind, entfernt werden, so daß hierdurch übermäßig viel Abfallstoffe anfallen.

**Die Erfindung löst die Aufgabe dadurch,** daß zumindest der untere, rechte Teil oder die gesamte untere Seite des Klebers mit einer Trennfolie bzw. Schutzfolie versehen ist.

Auf die obere Schutzfolie des Klebers kann in vorteilhafter Weise verzichtet werden. Die offenliegende Fläche des Klebers dient als Haftfläche für ein Bauteil. Dies ist dann von Vorteil, wenn die herausstehende Fläche Teil eines Fensterrahmens ist, der in einer Fuge bzw. in einer nach einer Seite offenen Mauerleibung aufgenommen ist, die nachträglich mit Putz aufgefüllt wird. Für diesen Vorgang wird der herausstehende Teil des Rahmens mittels dieser Schutzfolie gegen Verschmutzung geschützt. Das gleiche Arbeitsverfahren läßt sich auch bei Autofensterscheiben anwenden, die beim Spritzvorgang vor der Farbgebung geschützt werden sollen.

Durch die Verwendung der auf die Trägerfolie aufkaschierten unteren PVC-Folie kann man auch auf die zweite Schutzfolie verzichten. Für die Lagerhaltung oder für den Transport werden derartige formbare Bänder zusammengerollt. Dabei liegt die Außenoberfläche des zweiten bzw. oberen Klebers gegen die Oberfläche der reißfesten PVC-Schicht an und wird durch diese im gewickelten Zustand geschützt. Hierdurch wird das Herstellungsverfahren des formbaren Folienbandes kostengünstiger. Durch den Wegfall der zweiten Schutzfolie fallen beim Einbau des Folienbandes auch weniger Abfälle an.

Nach einem anderen Ausführungsbeispiel weist das formbare Folienband zumindest auf der ersten Seite bzw. Unterseite der Trägerfolie einen Kleber zum Befestigen auf einer Unterlage bzw. Abdeckfolie auf, während auf der zweiten bzw. anderen Seite bzw. auf der Oberseite eine eine gegenüber der Trägerfolie geringere Porosität aufweisende Deckfolie zusätzlich vorgesehen sein kann die den oberen Kleber jeweils über einen Randstreifen (**b**_{**3**}) abdeckt, der etwas größer, gleich oder etwas kleiner ist als die die Hälfte der Gesamtbreite (**b**_{**1**}) der Trägerfolie ist. Derartige Folienbänder können überall dort eingesetzt werden, wo Bauteile in Fugen aufgenommen und in der Fuge elastisch abgesichert werden sollen, wobei dieses in der Fuge aufgenommene Folienband auch als Dichtungselement fungieren soll. Hierzu ist in vorteilhafter Weise die Unterseite der Trägerfolie auf ihrer gesamten Länge und Breite mit einem Kleber versehen auf der eine reißfeste Trennfolie versehen ist.

Dieser Trägerstoff mit der PVC-Folie und dem Klebstoff wird auf ein Bauteil aufgebracht und in eine Fuge eingesetzt. Die Unterseite oder der freitragende Teil des Trägerstoffes, der nicht in der Fuge aufgenommen ist, kann ebenfalls mit einer Klebefläche versehen sein, die direkt auf der Rückseite der Trägerfolie aufgebracht wird, wobei der Kleber so ausgebildet ist, daß er nicht oder nur zum Teil in die Oberfläche der Trägerfolie eindringt. Auf der Oberfläche des unteren Klebers kann für die Montage eine Schutzfolie vorgesehen sein. Hierdurch läßt sich die Folie ohne weiteres aufwickeln, wobei die untere Schutzfolie gegen die Oberfläche des Klebers zur Anlage kommt und verhindert, daß die Folie in aufgewickeltem Zustand zusammenklebt. Ferner wird durch nur eine Trennfolie eine ausreichende Verstärkung der Trägerfolie erreicht, so daß sie sich in abgewickeltem Zustand nicht verzieht. Da nur eine Folie als Trennfolie notwendig ist, können die Gesamtkosten der Herstellung vermindert werden.

Das formbare Folienband kann unterschiedlich ausgebildet sein. Hierzu ist es vorteilhaft, daß die beiden Kleber jeweils nur einen Randstreifen b₃ abdecken, der halb so groß oder kleiner ist als die Gesamtbreite b₁ der Trägerfolie, und daß sich der eine oder obere Kleber von der linken Kante der Trägerfolie in Richtung der Längsmittellinie der Trägerfolie und der auf der Unterseite vorgesehene Kleber sich von der rechten Kante der Trägerfolie ebenfalls in Richtung der Längsmittellinie der Trägerfolie erstreckt.

Ferner ist es vorteilhaft, daß die innenliegende Kante des Klebers jeweils einen Abstand zur Längsmittellinie zwischen 0 mm und 20 mm bzw. 10 mm aufweist und daß der innenliegende Bereich bzw. Randstreifen b₄ des oberen Klebers den innenliegenden Bereich bzw. Randstreifen b₅ des unteren Klebers in einer Größe zwischen 1 mm und 30 mm überlappt.

Eine zusätzliche Möglichkeit ist gemäß einer Weiterbildung des erfindungsgemäßen Folienbandes, daß die eine Seite bzw. Unterseite unbehandelt ist und auf dieser Seite eine Folie bzw. Schutzfolie mit dem fest aufgetragenen Kleber direkt aufbringbar ist und daß der Teil des formbaren Folienbandes mit dem zugehörigen Kleber in eine Fuge bzw. in eine Mauerfuge mit einem Bauteil bzw. Rahmenteil einsetzbar ist und nach Fertigstellung die herausstehende Fläche bzw. der Randstreifen b₃, der nicht von der Fuge erfaßt ist, abtrennbar ist.

Vorteilhaft ist es auch, daß der Teil des formbaren Folienbandes mit dem zugehörigen Kleber in eine Fuge bzw. in eine Mauerfuge mit einem Bauteil bzw. Rahmenteil einsetzbar ist und nach Fertigstellung die herausstehende Fläche bzw. der Randstreifen b₃, der nicht von der Fuge erfaßt ist, abtrennbar ist, wobei an dem herausstehenden Teil der Trägerfolie eine Materialverdünnung in Form einer Einkerbung bzw. einer sich in Richtung der Deckfolie verjüngenden Einkerbung vorgesehen ist.

In weiterer Ausgestaltung der Erfindung ist es vorteilhaft, daß die Einkerbung V-förmig ausgebildet ist und geringfügig in die Deckfolie hineinragt.

Von Vorteil ist es ferner, daß die Einkerbung geringfügig in die Deckfolie hineinragt und vor der inneren Kante des Klebers und/oder der Schutzfolie endet und daß eine zweite Einkerbung auf der Oberseite der Schutzfolie vorgesehen ist.

Wird beispielsweise das erfindungsgemäße Folienband mit dem Fensterrahmen oder dem Türblattrahmen gemeinsam mit dem aufgeklebten Folienband eingesetzt, so kann anschließend die Mauerleibung mit Putz aufgefüllt werden, ohne daß das herausstehende Bauteil oder der Rahmen beschmutzt wird. Das überstehende Folienband deckt das Bauteil bzw. den Rahmen ab. Um auch eine größere Fläche des Rahmens abdecken zu können, läßt sich auf der Unterseite der Trägerfolie bzw. auf deren Klebefläche nachträglich eine Schutzfolie anbringen. Es ist jedoch auch möglich, die untere Seite der Trägerfolie als klebfreie Folie auszubilden und die Schutzfolie mit einer entsprechenden Klebefläche direkt auf die Trägerfolie aufzusetzen, wobei die Schutzfolie bis an die Außenkante der Mauerleibung heranragt. Nachdem der Verputzvorgang abgeschlossen ist, wird im Bereich der Stirnfläche oder der Abschlußkante der Mauerleibung die Schutzfolie gemeinsam mit der Trägerfolie abgetrennt, so daß nur der in der Fuge aufgenommene Teil der Trägerfolie und der Kleberstreifen in der Fuge verbleibt. Wird beispielsweise auf der Unterseite der Trägerfolie die gesamte Fläche mit Kleber versehen, so werden zwei Kleberschichten, und zwar auf der Ober- und Unterseite der Trägerfolie, in der Mauerleibung aufgenommen. Nach Auffüllen der Mauerfuge kann die überstehende Trägerfolie mit der reißfesten Trennfolie oder PVC-Folie sowie die unten liegende Klebefläche mit der zugehörigen Schutzfolie an der Stirnfläche der Mauerleibung mittels eines Messers abgetrennt werden.

In vorteilhafter Weise kann der Arbeitsvorgang an der Baustelle weiter vereinfacht werden, indem ein Teil der Trägerfolie mit einer Materialverdünnung versehen wird, so daß in diesem Bereich durch Abreißen des herausstehenden Teils der Trägerfolie ebenfalls eine scharfe Abrißkante entsteht. Da die Trennfolie eine wesentlich größere Reißfestigkeit als die Trägerfolie hat, wird vor dem Einbau dieses Folienbandes keine wesentliche Verminderung der Reißfestigkeit der Trennfolie herbeigeführt. Lediglich wenn die Trennfolie gemeinsam mit der Trägerfolie gegen die scharfkantige Mauerleibung gezogen wird, läßt sich die herausstehende Trennfolie mit der Trägerfolie scharfkantig abreißen.

Hierzu kann es vorteilhaft sein, daß ein geringfügiger Teil der Oberfläche der Trennfolie ebenfalls mit einer ringförmigen Einkerbung versehen ist. Derartige Einkerbungen können entweder gepreßt, gewalkt oder mittels eines Laserstrahls hergestellt werden. Mit einem Laserstrahl lassen sich ganz exakt auf 1/100 mm genau Einkerbungen vorsehen, so daß hierdurch eine definierte Abrißkante festgelegt wird, die den Arbeitsvorgang an der Baustelle wesentlich erleichtert.

**Weitere Vorteile und Einzelheiten der Erfindung sind in den Patentansprüchen** und in der Beschreibung erläutert und in den Figuren dargestellt, wobei bemerkt wird, daß alle Einzelmerkmale und alle Kombinationen von Einzelmerkmalen erfindungswesentlich sind. Es zeigt:
- Figur 1: eine Schnittdarstellung eines formbaren Folienbandes mit einer Trägerfolie und einer reißfesten PVC-Folie, wobei jeweils an der Außenseite Kleberstreifen vorgesehen sind,
- Figur 2: ein anderes Ausführungsbeispiel des formbaren Folienbandes, wobei die untere Klebefläche des Folienbandes ebenfalls in der Fuge einer Mauerleibung aufgenommen ist,
- Figur 3: ein zweites Ausführungsbeispiel des formbaren Folienbandes mit einer Einkerbung im Bereich der Stirnkante der Mauerleibung, wobei der untere Kleber mit der Schutzfolie nachträglich auf der Unterseite der Trägerfolie aufbringbar ist,
- Figur 4a: ein weiteres Ausführungsbeispiel des formbaren Folienbandes mit einer unteren Klebefläche, die sich über die gesamte Breite der Folie und einer oberen Klebefläche, die sich nur über einen Teil der Folie erstreckt,
- Figur 4b: ein weiteres Ausführungsbeispiel des formbaren Folienbandes mit einer unteren Klebefläche, die sich über die gesamte Breite der Folie erstreckt und die mit einer Schutzfolie abgedeckt ist,
- Figur 5a: ein Folienband bzw. ein Dicht- und Dämmband im aufgewickelten Zustand,
- Figuren 5b bis 5d: verschiedene Ausführungsbeispiele für die Verwendung eines Folien- bzw. Dicht- und Dämmbands als Dämm- und Dichtmittel für Blendfugen zur Vermeidung von Spannungen bei Putzanschlüssen bzw. bei abgehängten Decken oder Trennwänden.

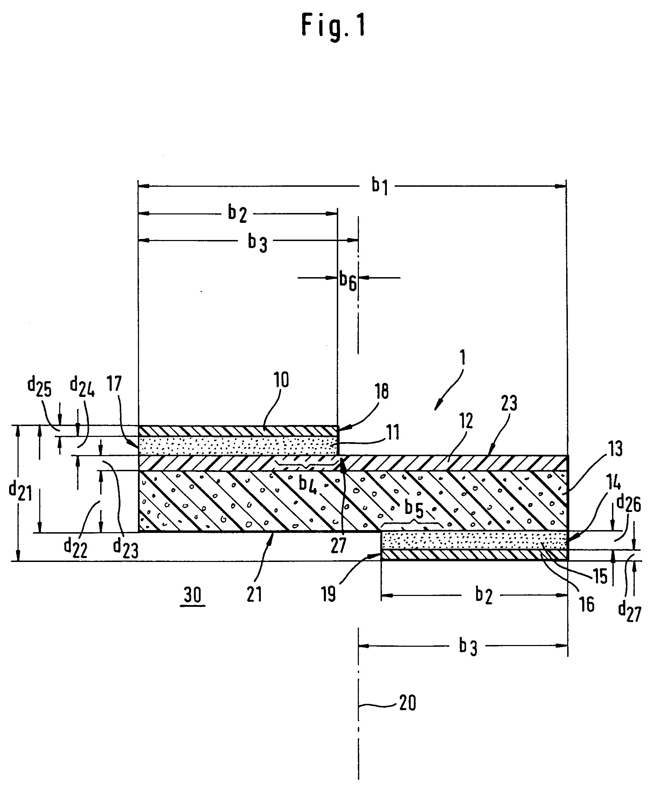

In der Zeichnung ist in Figur 1 mit 1 das gesamte formbare Folienband bezeichnet, das aus einer Trägerfolie 13 besteht, die aus einem Schaumstoffmaterial bestehen kann, dessen Härte und Reißfestigkeit wesentlich geringer ist als eine auf der Oberseite der Trägerfolie 13 vorgesehene Deckfolie 12 bzw. Trennfolie, die auch als PE-Folie ausgebildet sein kann und die mit der Oberfläche der Trägerfolie 13 beispielsweise verschmolzen bzw. auf dieser Oberfläche aufkaschiert wird. Die Dicke d₂₃ der Deckfolie 12 ist wesentlich geringer als die Dicke d₂₂ der Trägerfolie 13. Beispielsweise kann die Deckfolie 12 zwischen 1 und 50µ, insbesondere 10µ dick sein. Die Dicke d₂₂ der Trägerfolie 13 kann eine Stärke von 0,1 bis 3 mm aufweisen.

Die Deckfolie bzw. Trennfolie 12 dient zur Aufnahme eines Klebers 11, der die Breite b₂ aufweist. Die Breite des Randstreifens b₂ ist halb so groß wie die Gesamtbreite b₁ der Trägerfolie 13. In vorteilhafter Weise sollte b₂ nicht größer sein als der Randstreifen b₃, der die Hälfte von b₁, also der Gesamtbreite der Trägerfolie 13, darstellt. Der Kleber 11 ist mit einer Schutzfolie 10 abgedeckt, die auf der Oberseite des Klebers 11 aufgebracht wird. Die Schutzfolie 10 sowie der Kleber 11 erstrecken sich zwischen einem äußeren Rand 17 und einer Mittellinie 20 bzw. kann ein Rand 18 einen geringfügigen Abstand b₆ zur Mittellinie 20 aufweisen. Ferner ist es auch möglich, daß die Breite b₃ 60 % bzw. 70 % der Gesamtbreite b₁ der Trägerfolie 13 ausmacht, d. h. daß der Kleber 11 eine größere Breite aufweist als ein auf der Unterseite der Trägerfolie 13 aufgebrachter Kleber 15.

Nach einem weiteren in der Zeichnung nicht dargestellten Ausführungsbeispiel ist es z. B. möglich, daß ein Randbereich b₄ des Klebers 11 einen Randbereich b₅ des Klebers 15 überlappt.

Die Trägerfolie 13 kann aus Polyethylen oder Polypropyethylen oder aus einem anderen schaumstoffähnlichen Material mit großer Elastizität bestehen. Dadurch wirkt eine derartige Trägerfolie, wie nachstehend noch erläutert, auch als Dämpfungselement zwischen einem Rahmenteil bzw. Bauteil 24 und der Oberfläche einer Mauerfuge 25 einer Mauerleibung 30 beim Hausbau.

Wie bereits erwähnt, befindet sich auf der Unterseite der Trägerfolie 13 ebenfalls der Kleber 15, der beispielsweise gemäß Figur 1 die Breite b₂ aufweist, also etwas kleiner ist als die Hälfte der Gesamtbreite b₁ der Trägerfolie 13. Es ist jedoch auch möglich, daß der Kleber 15 die Breite b₃ und somit die Hälfte der Breite b₁ der Trägerfolie 13 aufweist. Im Ausführungsbeispiel weist der obere linke Kleber 11, der bis an die Kante 17 herangeführt ist, eine geringere Breite auf als die Hälfte der Gesamtbreite b₁. Für den Wickelvorgang ist es auf jeden Fall von Vorteil, wenn die Kleber 11 und 15 jeweils gleich groß sind und dabei jeweils halb so groß wie die Gesamtbreite b₁ der Trägerfolie 13.

Für den Einsatz des formbaren Folienbandes 1 ist es von Vorteil, wenn der eine Kleber 11 bzw. der obere Kleber sich gemäß Figur 1 von der linken Kante 17 der Trägerfolie 13 in Richtung der Längsmittellinie 20 der Trägerfolie 13 erstreckt und der andere bzw. der untere Kleber 15, der an der Unterseite der Trägerfolie 13 angeordnet ist, sich von der rechten Kante 14 der Trägerfolie 13 ebenfalls in Richtung der Längsmittellinie 20 der Trägerfolie 13 erstreckt. Die auf der Oberseite der Trägerfolie 13 vorgesehene Trennfolie 12 gestattet es, daß der untere Kleber 15 nicht nochmals mit einer zusätzlichen Schutzfolie 16 versehen sein muß, da die Trennfolie 12 in gewickeltem Zustand des Folienbandes 1 als Schutzfolie für den Kleber 15 fungiert, da er auf der Trennfolie 12 aufliegt. Die in Figur 1 dargestellte Schutzfolie 16 kann entfallen.

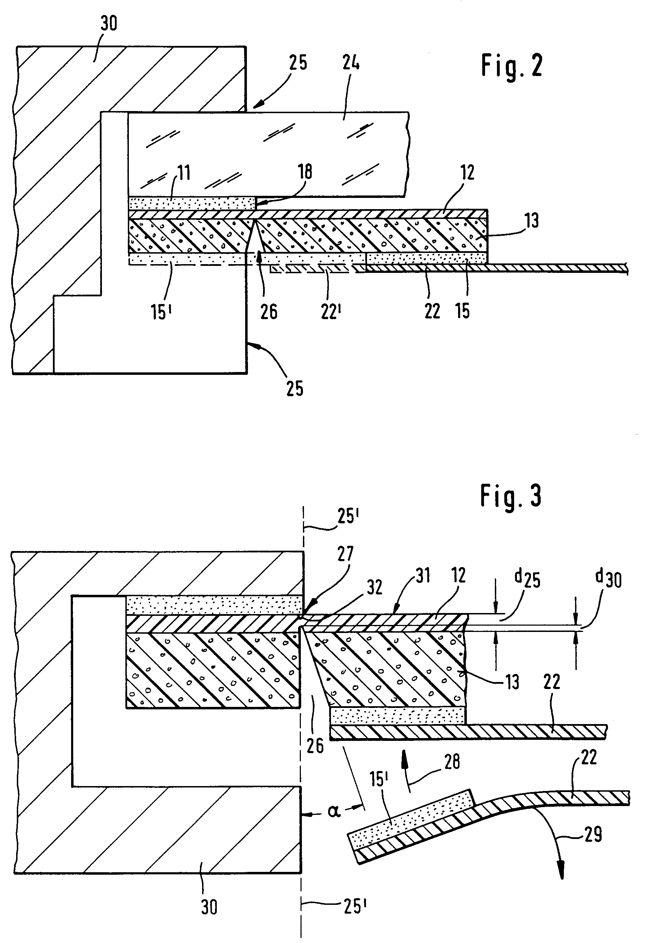

In Figur 2 ist die Anwendung des Folienbandes 1 als Abdeck- und Dichtungsband wiedergegeben. Gemäß Figur 2 wird z. B. das Rahmen- bzw. Bauteil 24 in eine Mauerfuge 25 einer Mauerleibung 30 eingesetzt. Zuvor wird jedoch das Folienband von einer Rolle abgewickelt, wobei entweder der Kleber 11 mit der Schutzfolie 10 oder der Kleber 15 mit der Schutzfolie 16 versehen ist. Da das Folienband gemäß Figur 1 symmetrisch ausgebildet ist, spielt es keine Rolle, welcher Kleber 15 bzw. 11 mit der Oberfläche des Rahmenteils 24 in Verbindung gebracht wird. Um das Arbeitsverfahren zu erleichtern, kann beispielsweise auch das Folienband 1 gemäß Figur 1 um 180° gedreht werden, so daß der Kleber 15 nach Abwickeln des Folienbandes 1 freigelegt und dann direkt auf das Bauteil bzw. den Rahmen 24 aufgebracht wird. Die Schutzfolie 12 bleibt noch auf dem Kleber 11 bzw. 15 haften.

Gemäß Figur 2 kann auf die freiliegende, untere Oberfläche des Klebers 15 die Abdeckfolie 22 direkt aufgebracht werden, wenn das Folienband 1 in die Mauerfuge 25 eingeschoben worden ist. Die Abdeckfolie 22 dient dann nur zum Schutz der gesamten Oberfläche des Bauteils bzw. Rahmenteils 24. Es ist auch möglich, daß die Abdeckfolie 22 mit einem Kleber 15' versehen ist, so daß dann der Kleber 15' mit der Abdeckfolie 22 an der Unterseite der Trägerfolie 13 befestigt wird (Figur 3).

Wie aus Figur 3 hervorgeht, ist es auch möglich, daß beispielsweise die Trägerfolie 13 mit einer Einkerbung 26 versehen sein kann, die sich in Richtung der Deckfolie 12 erstreckt und somit eine Materialschwächung des gesamten Folienbandes 1 herbeiführt, so daß beim Abziehen des Folienbandes 1 in Richtung des Pfeils 28 gemäß Figur 3 die Oberfläche 31 des Folienbandes 1 gegen die Kante 27 einer Mauerleibung gezogen wird und dadurch der herausragende Teil des Folienbandes 1 abgeschnitten wird.

Ist eine derartige Einkerbung 26 nicht vorgesehen, so muß das Folienband 1 entlang der Linie 25', die der Außenkante der Mauerfuge 25 entspricht, abgeschnitten werden.

Nach einem anderen Ausführungsbeispiel ist es gemäß der Erfindung auch möglich, daß die Einkerbung 26 geringfügig in die Deckfolie 12 hineinragt, so daß auch diese geschwächt wird und dadurch der Abreißvorgang des Folienbandes 1 an der Kante 27 im Bereich des Randes 18 abgetrennt wird.

Ferner ist es auch möglich, daß an der Oberseite der Deckfolie 12 ebenfalls eine in der Zeichnung nicht dargestellte Einkerbung vorgesehen sein kann, so daß der Abreißvorgang weiterhin erleichtert wird.

Gemäß Figur 2 kann hierzu die Abdeckfolie 22' bis an die Einkerbung 26 herangeführt werden. Hierzu wird die untere Klebefläche bzw. der Kleber 15 entsprechend verbreitert (Figur 2).

Wie aus Figur 1 hervorgeht, ist die Trägerfolie 13 mit der Dicke d₂₂ zumindest doppelt so groß wie die Dicken d₂₃, d₂₄, d₂₅, d₂₆ bzw. d₂₇ des Klebers 15 bzw. der Schutzfolie 10 bzw. 22.

Die Stärken der Schutzfolien 10 und 22 liegen im Zehntel-Millimeter-Bereich, während die Stärke der Trägerfolie zwischen 0,1 und 5 bis 8 mm betragen kann.

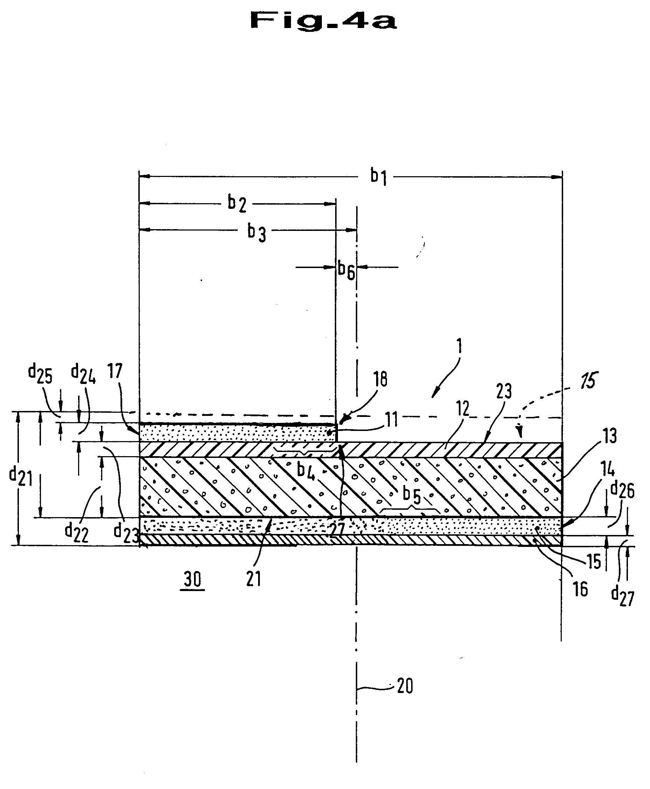

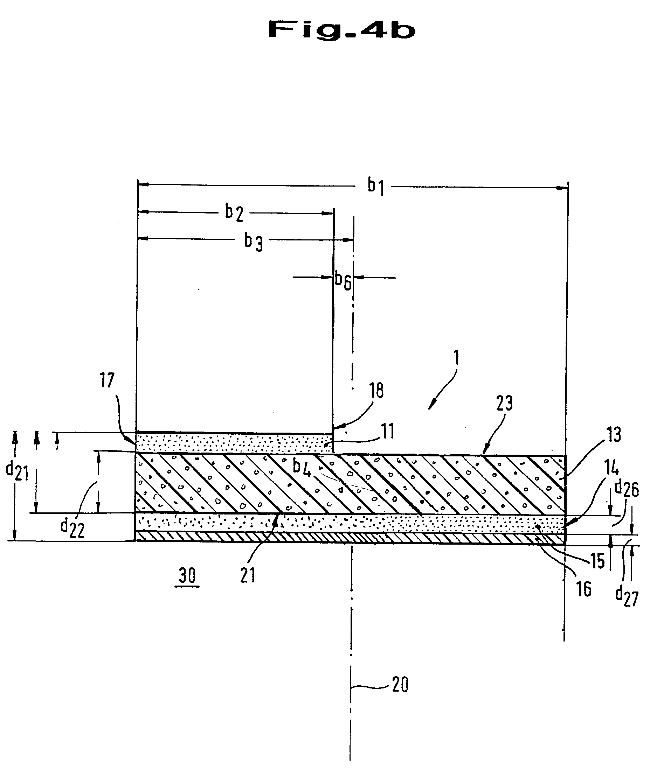

In Fig. 4 ist ein weiteres Ausführungsbeispiel der Folie 1 dargestellt, die aus der Trägerfolie 13 besteht, die ebenfalls gemäß Fig. 1 aus einem Schaumstoffmaterial bestehen kann, dessen Härte und Reißfestigkeit wesentlich geringer ist als die auf der Unterseite der Trägerfolie 13 bzw. auf dem Kleber 15 vorgesehenen Deckfolie bzw. Trennfolie 16, die auch als PE-Folie ausgebildet sein kann und die mit der Oberfläche des Klebers 15 beispielsweise lösbar verbunden bzw. auf die Oberfläche des Klebers 15 aufkaschiert wird.

Die Breite des Randstreifens b₂ entspricht mindestens 30% der Gesamtbreite b₁ der Trägerfolie 13. In vorteilhafter Weise sollte b₂ so groß sein wie die Breite b₁ der Folie. Der Kleber 11 ist mit keiner Schutzfolie abgedeckt, diese kann gemäß Fig. 4 entfallen.

Die Schutzfolie 16 sowie der Kleber 15 auf der Unterseite der Folie 1 erstrecken sich über die Gesamtbreite b₁ der Folie 1.

Ferner ist es möglich, daß die mit Bezug auf die Draufsicht der Folie 1 innenliegenden Kanten 18, 19 des oberen und unteren Klebers 11, 15 jeweils kurz vor der Mittellinie 20 der Folie 1 enden.

Vorteilhaft ist es auch, daß die mit Bezug auf die Draufsicht der Folie 1 innenliegenden Kanten 18, 19 des oberen und unteren Klebers 11, 15 jeweils etwas hinter der Mittellinie 20 der Folie 1 enden, so daß sich ein Teil des oberen Klebers 11 und ein Teil des unteren Klebers 15 überlappen.

Nach einer weiteren Ausführungsform ist es auch möglich, daß die gesamte Fläche bzw. der rechte Teil des unteren Klebers 15 und auch die klebfreie Fläche der Folie 1 mit der Trennfolie bzw. Schutzfolie 16 versehen sind, so daß diese Flächen gegen Verschmutzung geschützt sind.

Wird die gesamte untere Folie 1 mit der Trennfolie 16 versehen, so kann auf die obere Trennfolie verzichtet werden und die Folie läßt sich trotzdem aufwickeln, da beim Wickelvorgang die untere Trennfolie 16 gegen die obere Klebefläche des Klebers 11 zur Anlage kommt und dadurch später ein Abwickeln der Folie 1 von der Klebefläche ohne weiteres möglich ist. Hierduch lassen sich die Kosten zur Herstellung der Folie 1 reduzieren. Bei der Verarbeitung wird durch diese eine Trenn- oder Schutzfolie eine ausreichende Verstärkung der Folie 1 bzw. des Schaumstoffträgers 13 sichergestellt, so daß sie sich nicht verzieht oder etwa einreißt.

Der Kleber 11 kann als Fließ, Folie, Gewebe oder als zweiseitiges Klebeband ausgebildet sein.

Die Trägerfolie kann 0,1 mm bis 20 mm stark und 20 mm bis 100 mm breit sein.

Der Kleber 15 kann als flüssiger Kleber und wie bereits erwähnt auf der Gesamtbreite der Folie 1 vorgesehen sein. Wird er nur als Steifenkleber vorgesehen, so ist es wichtig, daß er mit Bezug auf Fig. 4 stets rechts beginnt. Die Schutzfolie sollte sich immer über die Gesamtbreite der Folie erstrecken.

Ein weiteres Ausführungsbeispiel ist in Figur 4b dargestellt, das ebenfalls aus einem formbaren Folienband 1 besteht, das zum Abschirmen, Isolieren, Abdecken oder Dichten bzw. zum Befestigen von Teilen dient. Das formbare Folienband 1 besteht aus einer Trägerfolie 13, die aus einem Schaumstoffmaterial, beispielsweise Polypropylen, oder aus einem anderen Kunststoffmaterial gebildet sein kann, das möglichst wenig Feuchtigkeit aufnehmen soll. Die Trägerfolie 13 ist mit einer Oberseite 23 versehen, auf der sich ein Kleber 11 befindet, der etwa die Hälfte der Breite der Trägerfolie 13 abdeckt. Die Hälfte der Breite der Trägerfolie ist mit b₃ in Figur 4b gekennzeichnet. Es ist jedoch auch möglich, daß der Kleber 11 5 % bis 10 % kleiner sein kann als die Breite b₃. Diese Reduzierung ist durch die Breite b₆ gekennzeichnet. Die Oberfläche des Klebers 11 ist im aufgerollten Zustand der Trägerfolie 13 frei, d. h. nicht mit einer Schutzfolie versehen. Auf der Unterseite bzw. ersten Seite 21 der Trägerfolie 13 befindet sich ein weiterer Kleber 15, der die Gesamtbreite b₁ der Trägerfolie 13 abdeckt. Der Kleber 15 ist mit einer entsprechend großen Schutzfolie 16 abgedeckt. Die Trägerfolie 13 kann als endloses Band hergestellt werden, wobei der Kleber 11 bzw. 15 sich ebenfalls in Längsrichtung der Trägerfolie 13 erstreckt. Damit das formbare Folienband 1 an seinem Bestimmungsort ohne weiteres transportiert werden kann, wird es hierzu auf einer Rolle aufgewickelt. Beim Aufwickelvorgang liegt die Oberfläche des Klebers 11 gegen die äußere Oberfläche der Schutzfolie 16 an. Es kann also hierdurch auf eine zusätzliche Schutzfolie für den oberen Kleber 11 verzichtet werden.

Das Folienband 1 wird, wie auch bei den anderen Ausführungsbeispielen 1 bis 4a, hauptsächlich als Dicht- und Dämmband für den Putz- und Trockenbau eingesetzt. Im Ausführungsbeispiel gemäß Figur 4a und 4b ist die Trägerfolie 13 als PE-Schaum ausgebildet und weist eine Dicke zwischen 2,5 mm und 3,5 mm, in vorteilhafter Weise 3 mm, auf. Die Dicke des Klebers ist kleiner als 0,1 mm, so daß im aufgerollten Zustand der Kleber 11 nicht zu dick aufträgt, wenn das Folienband aufgerollt wird. Da der obere Kleber 11 ohne Abdeckung versehen ist, kann nach Abwickeln des Folienbands die Klebefläche 11 für die Verklebung sofort zur Verfügung stehen bzw. in die entsprechende Mauerfuge eingefügt und befestigt werden. Die Trenn- oder Abdeckfolie 16 wird von der Trägerfolie abgezogen, wenn die Trägerfolie 13 mittels des Klebers 11 befestigt worden ist. Der besondere Vorteil des erfindungsgemäßen Folienbands besteht also darin, ein Folienband bzw. Dicht- und Dämmband zu schaffen, das mit zwei Klebeflächen versehen ist, jedoch nur mittels einer Trenn- bzw. Schutzfolie 16 abgedeckt wird.

Wird beispielsweise das Folien- bzw. Dämmband 13 in eine Mauerfuge eingesetzt, also zwischen einen Wandteil und einen Deckenanschluß, so dient lediglich die Klebefläche 11 als Haftmittel, wobei die zweite Klebefläche mittels der Schutzfolie 16 abgedeckt ist. Das in die Fuge hineinreichende Formband wird dann durch den Deckenabschluß begrenzt. Das aus der Fuge herausstehende Formband kann später abgeschnitten werden, wobei die Schutzfolie 16 in der Fuge verbleiben kann. Hierdurch können Material- und Arbeitskosten eingespart werden.

In Figur 3 ist dagegen die untere, linke Hälfte nur bis zur Mittellinie 25' mit einer Klebefläche versehen, so daß das in die Fuge hineinragende Dämmband 13 nur mit einer Klebefläche 11 gegen die innere Oberfläche der Mauerleibung 30 klebend anliegt, während die gegenüberliegende Oberfläche klebefrei ist, bzw. die Oberfläche der Trägerfolie 13 bildet zur Oberfläche der gegenüberliegenden Wand der Mauerleibung 30 einen Abstand, die mittels Putz anschließend gefüllt wird. Die Herstellung einer Trägerfolie 13 nach den Figuren 2 bis 3 ist damit aufwendiger und die Montage lohnintensiv. Durch die erfindungsgemäße Anordnung gemäß Figur 4b können also gegenüber der Trägerfolie 13 nach Figur 2 und 3 Kosten für die Herstellung des Folienbands 1 eingespart werden. Ferner werden auch bei der Montage eines Formbands gemäß Figur 4b die Arbeitszeit reduziert und somit die Kosten insgesamt gesenkt.

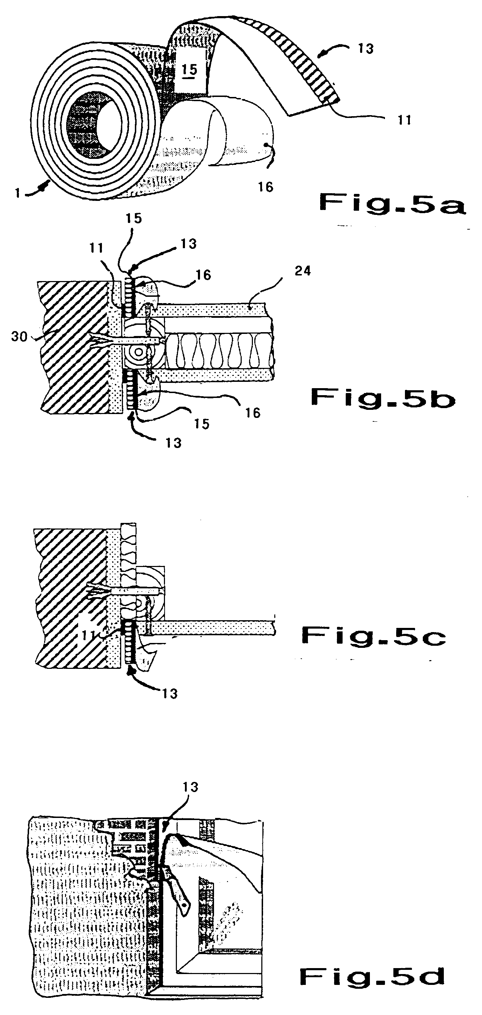

In den Figuren 5a, 5b, 5c und 5d ist das Folienband bzw. Dicht- und Dämmband 1 dargestellt, wobei die Figuren 5b, 5c und 5d verschiedene Einbaubeispiele zeigen.

In den Figuren 5a bis 5d ist nochmals das Ausführungsbeispiel nach Figur 4b im einzelnen veranschaulicht, wobei in Figur 5a das Folienband im aufgewickelten Zustand dargestellt ist.

Die Figuren 5b bis 5d zeigen verschiedene Ausführungsbeispiele des Folienbands bzw. des Dicht- und Dämmbands 1, das in eine entsprechend vorbereitete Fuge zwischen Wandanschluß 30 und einem Bauteil bzw. Deckenteil oder Rahmenanschluß eingesetzt wird und somit einen Anschluß zwischen der Mauerleibung 30 und dem Bauteil oder Rahmenteil 24 schafft. Die freibleibende Klebefläche 15 kann gemäß Figur 3 bzw. 5d mit einer Abdeckfolie bzw. Unterlage verbunden werden, beispielsweise mit der Oberfläche eines Fensters, die sie bei der weiteren Bearbeitung schützen soll. Nach Abschluß der Arbeiten kann die Abdeckfolie mittels eines Messers an der Kante 25 bzw. 25' gemäß Figur 2 und 3 bzw. 5d entfernt werden.

### Bezugszeichenliste

- **1**: **Formbares Folienband**
- **10**: **Schutzfolie**
- **11**: **Kleber**
- **12**: **Deckfolie, Trennfolie, PE-Folie**
- **13**: **Trägerfolie**
- **14**: **Rand**
- **15**: **Kleber**
- **15'**: **Kleber**
- **16**: **Schutzfolie**
- **16'**: **Schutzfolie**
- **17**: **Kante, Rand**
- **18**: **Kante, Rand**
- **19**: **Kante, Rand**
- **20**: **Mittellinie**
- **21**: **erste Seite, Unterseite**
- **22**: **Abdeckfolie, Unterlage**
- **23**: **zweite Seite bzw. andere Seite bzw. Oberseite**
- **24**: **Bauteil bzw. Rahmenteil**
- **25**: **Mauerfuge**
- **25'**: **Linie**
- **26**: **Einkerbung**
- **27**: **Kante, Mauerleibung**
- **28**: **Pfeil**
- **29**: **Pfeil**
- **30**: **Mauerleibung**
- **31**: **Oberfläche, Oberseite**
- **d**_{**21**}: **Dicke der Schutzfolie**
- **d**_{**22**}: **Dicke der Trägerfolie 13**
- **d**_{**23**}: **Dicke der Deckfolie 12**
- **d**_{**24**}: **Dicke**
- **d**_{**25**}: **Dicke**
- **d**_{**26**}: **Dicke, Kleber**
- **d**_{**27**}: **Dicke, Schutzfolie**
- **d**_{**30**}: **Dicke, Schutzfolie**
- **b**_{**1**}: **Gesamtbreite der Trägerfolie 13**
- **b**_{**2**}: **Randstreifen**
- **b**_{**3**}: **Randstreifen**
- **b**_{**3**}: **Randstreifen**
- **b**_{**4**}: **Randstreifen**
- **b**_{**5**}: **Randstreifen**
- **b**_{**6**}: **Abstand**

## Patentansprüche

1. Folienband (1) zum Abschirmen, Isolieren, Abdecken oder Dichten und/oder zum Befestigen von Teilen mit einer Trägerfolie (13), **dadurch gekennzeichnet,** daß zumindest der untere, rechte Teil oder die gesamte untere Seite des Klebers (15) mit einer Trennfolie bzw. Schutzfolie (16) versehen ist.

2. Folienband nach Anspruch 1, **dadurch gekennzeichnet,** daß die beiden Kleber (11, 15) zumindest jeweils nur einen Randstreifen (b₃) abdecken, der halb so groß oder kleiner ist als die Gesamtbreite (b₁) der Trägerfolie (13).

3. Folienband nach Anspruch 1 oder 2, **dadurch gekennzeichnet,** daß sich der eine oder obere Kleber (11) von der linken Kante (17) der Trägerfolie (13) in Richtung der Längsmittellinie (20) der Trägerfolie (13) und der auf der Unterseite (21) vorgesehene Kleber (15) sich von der rechten Kante (14) der Trägerfolie (13) ebenfalls in Richtung der Längsmittellinie (20) der Trägerfolie (13) erstreckt.

4. Folienband nach Anspruch 1, **dadurch gekennzeichnet,** daß die innenliegenden Kanten (18, 19) des Klebers (11, 15) jeweils einen Abstand zur Längsmittellinie zwischen 0 mm und 20 mm bzw. 10 mm aufweisen.

5. Folienband nach einem oder mehreren der vorhergehenden Ansprüche, **dadurch gekennzeichnet,** daß der innenliegende Bereich bzw. Randstreifen (b₄) des oberen Klebers (11) den innenliegenden Bereich bzw. Randstreifen (b₅) des unteren Klebers (15) in einer Größe zwischen 1 mm und 30 mm überlappt.

6. Folienband nach Anspruch 1, **dadurch gekennzeichnet,** daß die eine Seite bzw. Unterseite (21) unbehandelt ist und auf dieser Seite eine Folie bzw. Schutzfolie (16) mit dem fest aufgetragenen Kleber (15) direkt aufbringbar ist.

7. Folienband nach einem oder mehreren der vorhergehenden Ansprüche, **dadurch gekennzeichnet,** daß der Teil des formbaren Folienbandes (1) mit dem zugehörigen Kleber (11) in eine Fuge bzw. in eine Mauerfuge (25) mit einem Bauteil bzw. Rahmenteil (24) einsetzbar ist und nach Fertigstellung die herausstehende Fläche bzw. der Randstreifen (b₃), der nicht von der Fuge erfaßt ist, abtrennbar ist.

8. Folienband nach einem oder mehreren der vorhergehenden Ansprüche, **dadurch gekennzeichnet,** daß der Teil des formbaren Folienbandes (1) mit dem zugehörigen Kleber (11) in eine Fuge bzw. in eine Mauerfuge (25) mit einem Bauteil bzw. Rahmenteil (24) einsetzbar ist und nach Fertigstellung die herausstehende Fläche bzw. der Randstreifen (b₃), der nicht von der Fuge erfaßt ist, abtrennbar ist, wobei an dem herausstehenden Teil der Trägerfolie (11) eine Materialverdünnung vorgesehen ist.

9. Folienband nach einem oder mehreren der vorhergehenden Ansprüche, **dadurch gekennzeichnet,** daß an dem herausstehenden Teil der Trägerfolie (13) eine Materialverdünnung in Form einer Einkerbung (26) bzw. einer sich in Richtung der Deckfolie (12) verjüngenden Einkerbung (26) vorgesehen ist.

10. Folienband nach einem oder mehreren der vorhergehenden Ansprüche, **dadurch gekennzeichnet,** daß die Einkerbung (26) V-förmig ausgebildet ist.

11. Folienband nach einem oder mehreren der vorhergehenden Ansprüche, **dadurch gekennzeichnet,** daß die Einkerbung (26) geringfügig in die Deckfolie (12) hineinragt.

12. Folienband nach einem oder mehreren der vorhergehenden Ansprüche, **dadurch gekennzeichnet,** daß die Einkerbung (26) geringfügig in die Deckfolie (12) hineinragt und vor der inneren Kante (18) des Klebers (11) und/oder der Schutzfolie (10) endet.

13. Folienband nach einem oder mehreren der vorhergehenden Ansprüche, **dadurch gekennzeichnet,** daß eine zweite Einkerbung auf der Oberseite (31) der Schutzfolie (12) vorgesehen ist.

14. Folienband nach einem oder mehreren der vorhergehenden Ansprüche, **dadurch gekennzeichnet,** daß die mit Bezug auf die Draufsicht der Folie (1) innenliegenden Kanten (18, 19) des oberen und unteren Klebers (11, 15) jeweils kurz vor der Mittellinie (20) der Folie (1) enden.

15. Folienband nach einem oder mehreren der vorhergehenden Ansprüche, **dadurch gekennzeichnet,** daß die mit Bezug auf die Draufsicht der Folie (1) innenliegenden Kanten (18, 19) des oberen und unteren Klebers (11, 15) jeweils etwas hinter der Mittellinie (20) der Folie (1) enden, so daß sich ein Teil des oberen Klebers (11) und ein Teil des unteren Klebers (15) überlappen.

16. Folienband nach einem oder mehreren der vorhergehenden Ansprüche, **dadurch gekennzeichnet,** daß zumindest der untere Kleber (15) mit einer Trennfolie bzw. Schutzfolie (16) versehen ist.

17. Folienband nach einem oder mehreren der vorhergehenden Ansprüche, **dadurch gekennzeichnet,** daß die gesamte Fläche bzw. der rechte Teil des unteren Klebers (15) und auch die klebfreie Fläche der Folie 1 mit der Trennfolie bzw. Schutzfolie (16) versehen sind.

18. Formbares Folienband (1) zum Abschirmen, Isolieren, Abdecken oder Dichten und/oder zum Befestigen von Teilen mit einer Trägerfolie (13), **gekennzeichnet durch** folgende Merkmale:
1) zumindest auf der ersten Seite bzw. Unterseite (21) der Trägerfolie (13) ist ein Kleber (15) zum Befestigen auf einer Unterlage bzw. Abdeckfolie (22) vorgesehen,
2) der Kleber (15) zum Befestigen auf einer Unterlage bzw. zum Befestigen einer Abdeckfolie (22) erstreckt sich über zumindest mehr als ein Drittel der Gesamtbreite b₁ der Trägerfolie (13) und maximal über die Gesamtbreite b₁ der Trägerfolie (13),
3) auf der zweiten bzw. anderen Seite bzw. auf der Oberseite (23) der Trägerfolie (13) ist ein Kleber (11) vorgesehen,
4) der Kleber (11) zum Befestigen erstreckt sich zumindest über ein Drittel der Gesamtbreite b₁ der Trägerfolie (13) und maximal über zwei Drittel der Gesamtbreite b₁ der Trägerfolie (13),
5) der obere Kleber (11) beginnt mit seiner Klebefläche jeweils an der außenliegenden Stirnkante (17) der Trägerfolie (13), und der untere Kleber (15) beginnt mit seiner Klebefläche jeweils an der der oberen Stirnkante (17) gegenüberliegenden Stirnkante (14) der Trägerfolie (13).
